# EUROPÄISCHE PATENTSCHRIFT

(11) **EP 0 941 886 B1**
(45) Veröffentlichungstag und Bekanntmachung des Hinweises auf die Patenterteilung: **27.08.2003**
(21) Anmeldenummer: 99102517.2
(22) Anmeldetag: 10.02.1999
(51) Int. Cl.: B60K 20/06, B60R 16/00, F16H 59/02

(54) **Fahrzeuggetriebebetätigungseinrichtung am Lenkrad**
Device for motor vehicle gear shift arranged on the steering wheel
Dispositif de commande d'une boîte de vitesses dans un véhicule automobile disposé au volant de direction

(30) Priorität: 10.03.1998 DE 19810375
(43) Veröffentlichungstag der Anmeldung: 15.09.1999
(73) Patentinhaber: Bayerische Motoren Werke Aktiengesellschaft, 80788 München (DE)
(72) Erfinder: Schachtner, Bernhard, 84381 Johanniskirchen (DE); Ohnemus, Ulrich, 80803 München (DE); Maurer, Michael Dr., 80995 München (DE); Birzl, Willy, 86668 Karlshuld (DE)

(56) Entgegenhaltungen:
- EP-A- 0 519 528
- EP-A- 0 635 388
- DE-A- 4 311 852
- DE-U- 9 320 309
- US-A- 5 365 803
- 'Porsche: Une Tiptronic sportive jusq'au bout des ongles' REVUE AUTOMOBILE Bd. 89, Nr. 29, 14 Juli 1994, Seite 5

## Beschreibung

Die Erfindung betrifft eine mit einem Lenkrad sich mitdrehende Betätigungseinrichtung zum Schalten der Gangstufen eines Fahrzeuggetriebes gemäß dem Oberbegriff des Patentanspruches 1.

Aus der gattungsgemäßen EP 635 388 A1 ist eine schwenkbar am Lenkrad angeordnete Schaltwippe bekannt. Die Schaltwippe weist zwei auf der Vorderseite des Lenkrads liegende Betätigungspunkte auf. Durch Ausübung einer Druckkraft auf die Betätigungspunkte auf der Vorderseite des Lenkrads kann die Schaltwippe in die eine Schwenkrichtung oder in die entgegengesetzte Schwenkrichtung verschwenkt werden. Bei einem starken Lenkeinschlag können jedoch die Betätigungs- bzw. Schwenkrichtungen verwechselt werden.

Aus der DE 43 11 852 A1 ist eine Betätigungseinrichtung bekannt, bei der zum manuellen Hochschalten bzw. Zurückschalten auf der Vorderseite des Lenkrads Drucktaster angeordnet sind. Bei einer Variante kann die "Betätigungseinrichtung" auf der dem Fahrer zugewandten Seite und/oder der dem Fahrer abgewandten Seite des Lenkrads angeordnet sein.

Die EP 0 519 528 B1 beschreibt ein Getrieberegelungsmodul, dessen manuell bedienbare Schalter zum Hoch- oder Zurückschalten eines Automatikgetriebes am Lenkrad angebracht sind. Die beschriebene Anbringungsweise am Lenkrad, nämlich sich einander diametral gegenüberliegend an verschiedenen Seiten des Lenkrads, bei derselben Betätigungsrichtung zum Hoch- und zum Zurückschalten, hat den Nachteil, daß durch eine Lenkbewegung nicht nur das Bedienelement seinen Platz wechselt, sondern auch, insbesondere bei einer halben Lenkradumdrehung, die Funktion der Bedienelemente bezüglich der Fahrerposition wechselt. Dies kann zu Fehlschaltungen durch den Fahrer führen.

Deshalb ist es Aufgabe der Erfindung, eine mit einem Lenkrad sich mitdrehende manuelle Betätigungseinrichtung zum Schalten der Gangstufen eines Fahrzeuggetriebes bereitzustellen, bei der eine Fehlbedienung aufgrund des Ortswechsels der Bedienelemente beim Lenken ausgeschlossen ist.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist eine mit einem Lenkrad sich mitdrehende manuelle Betätigungseinrichtung zum Schalten der Gangstufen eines Fahrzeuggetriebes, insbesondere eines hilfskraftgeschalteten Getriebes, bestehend aus mindestens einer am Lenkrad angebrachten Schaltereinrichtung, die es ermöglicht, die Gangstufen des Fahrzeuggetriebes sequentiell Hoch- und Zurückzuschalten, dadurch gekennzeichnet, daß die Schaltrichtung zum Hochschalten der Gangstufen der Schaltrichtung zum Zurückschalten der Gangstufen im wesentlichen entgegengesetzt gerichtet ist und beide Schaltrichtungen im wesentlichen in Richtung einer Fahrzeuglängsebene verlaufen.

Das hat den Vorteil, daß selbst bei einer Anordnung von mehreren Bedienelementen am Lenkrad, die durch eine Lenkraddrehung einem Ortswechsel unterworfen sind und dabei ihre Position gegenseitig vertauschen können, sich ihre Funktion bezüglich der Schaltrichtung für Hoch- und Zurückschalten nicht ändert.

Eine bevorzugte Ausführung der Erfindung sieht vor, daß die Schaltereinrichtung ein in entgegengesetzte Richtungen bewegbarer, selbstrückstellender Kippschalter ist, mit dem Vorteil, daß für das Hoch- und Zurückschalten nur jeweils eine Schaltereinrichtung mit jeweils einem Anschluß am Lenkrad angebracht werden muß.

Bei einer weiteren bevorzugten Ausführung der Erfindung besteht jeweils eine Schaltereinrichtung aus zwei selbstrückstellenden Schaltern. Das hat den Vorteil, daß die Schalter zum Hochschalten der Gangstufen unabhängig von den Schaltern zum Zurückschalten der Gangstufen am Lenkrad für den Fahrer ergonomisch günstig plaziert werden können.

Eine vorteilhafte Ausführung der Erfindung sieht vor, daß die Schaltrichtung zum Hochschalten der Gangstufen vom Fahrer weggerichtet ist und die Schaltrichtung zum Zurückschalten der Gangstufen zum Fahrer hingerichtet ist oder umgekehrt. Eine solche Art der Anbringung der Schaltereinrichtungen am Lenkrad berücksichtigt ergonomisch vorteilhafterweise zusätzlich noch die Lage der Finger des Fahrers am Lenkrad. So kann zum Beispiel mit dem Daumen in einer Richtung ohne Veränderung der Lage der Hand sequentiell hochgeschaltet werden, während das sequentielle Zurückschalten mit einem anderen Finger dieser Hand in der anderen Richtung erfolgen kann, ebenfalls ohne die Lage der Hand am Lenkrad zu verändern. Dies vor allem dann, wenn die Schaltereinrichtung am Lenkrad an oder nahe einem Lenkradkranz so angebracht ist, daß sie sich in Reichweite der Finger des Fahrers befindet, wenn dieser das Lenkrad in einer Stellung für Geradeausfahrt hält. Wird dabei für jede Hand eine solche Schaltereinrichtung zum Hoch- und Zurückschalten vorgesehen, so ist ein Vermeiden von Fehlschaltungen selbst dann gegeben, wenn mit einer Hand hochgeschaltet wird, mit der anderen Hand zurückgeschaltet wird und gleichzeitig das Lenkrad verdreht wird. Selbst wenn das Lenkrad so verdreht ist, daß eine Schaltereinrichtung die Stellung der anderen einnimmt, die diese bei Geradeausfahrt einnehmen würde, sind die Schaltrichtungen zum Hoch- und Zurückschalten von ihrer Funktion her nicht verändert und der Fahrer kann ohne Nachdenken in jeder Stellung des Lenkrads die manuelle Betätigungseinrichtung zum Schalten der Gangstufen des Fahrzeuggetriebes benutzen.

Drei bevorzugte Ausführungsbeispiele der Erfindung sind in der nachfolgenden Beschreibung und der zugehörigen Zeichnung näher dargestellt. Es zeigen:
- Figur 1 und Figur 2: jeweils eine Vorder- und eine Rückseite eines Lenkrads gemäß der Erfindung,
- Figur 3 und Figur 4: ebenfalls eine Vorder- und eine Rückseite eines Lenkrads gemäß der Erfindung in anderer Ausführungsform und
- Figur 5: eine Vorderseite eines erfindungsgemäßen Lenkrads in einer weiteren Ausführungsform und
- Figur 6: einen Querschnitt des Lenkrads aus Figur 5.

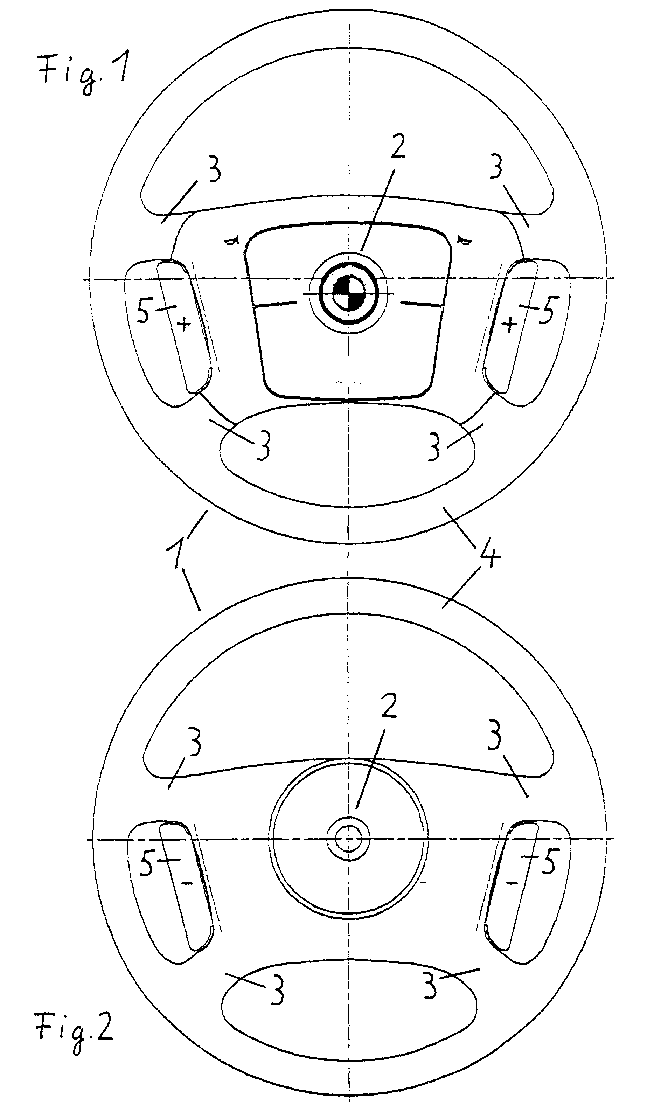

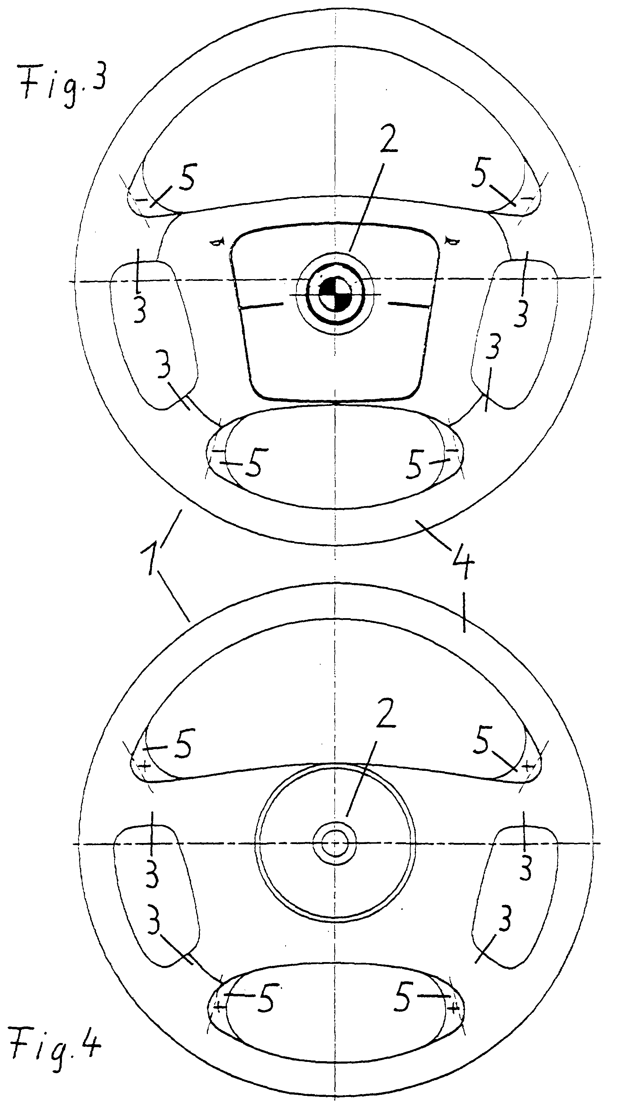

Figur 1 zeigt die Vorderseite eines Lenkrads 1, bestehend aus einer Lenkradnabe 2, vier Lenkradspeichen 3 und einem Lenkradkranz 4. Zwischen jeweils zwei Lenkradspeichen 3 ist an der Lenkradnabe 2 in Richtung zum Lenkradkranz 4 hin jeweils eine Schaltereinrichtung 5 zum manuellen Schalten der Gangstufen eines nicht gezeichneten Fahrzeuggetriebes angebracht. Die Schaltereinrichtungen 5 drehen sich bei einer Lenkradbewegung mit dem Lenkrad 1 mit. Sie sind so in der Nähe des Lenkradkranzes 4 angebracht, daß sie sich in Reichweite der nicht gezeichneten Finger des nicht gezeichneten Fahrers befinden, wenn dieser das Lenkrad 1 in einer Stellung für Geradeausfahrt hält. Zum sequentiellen Hochschalten des Fahrzeuggetriebes kann der Fahrer einen Daumen seiner.nicht gezeichneten am Lenkrad 1 befindlichen linken oder rechten Hand benutzen, indem er die linke oder rechte Schaltereinrichtung 5 in eine von ihm weggerichtete Schaltrichtung bewegt. Bewegt er einen anderen Finger der linken oder rechten Hand in die entgegengesetzte Richtung, zu ihm hingerichtet, und betätigt dadurch die als Kippschalter ausgebildete Schaltereinrichtung 5 von hinten (Figur 2), dann schaltet das Fahrzeuggetriebe sequentiell zurück. Das heißt, bei jeder Betätigung der Schaltereinrichtung 5 wird um eine Gangstufe zurückgeschaltet. Als Symbolik dafür ist in Figur 2 auf der Rückseite des Lenkrads 1 ein Zeichensymbol "Minus" auf der Schaltereinrichtung 5 dargestellt, was zurückschalten bedeutet. Während in Figur 1 zum sequentiellen Hochschalten des Fahrzeuggetriebes jede einzelne Betätigung der Schaltereinrichtung 5 eine Gangstufe hochschaltet, was symbolisch angedeutet wird durch das Zeichensymbol "Plus" auf der Schaltereinrichtung 5 auf der Vorderseite des Lenkrads 1. Die Schaltrichtungen zum Hoch- bzw. Zurückschalten könnten allerdings auch vertauscht sein, das heißt, eine Betätigung der Schaltereinrichtung 5 zum Fahrer hin würde das Fahrzeuggetriebe jeweils um eine Gangstufe hochschalten, während eine Betätigung vom Fahrer weg jeweils eine Gangstufe zurückschalten würde. Dies ist auch so im Ausführungsbeispiel der Figuren 3 und 4.

Die Ausführungsform der Betätigungseinrichtung zum Schalten der Gangstufen eines Fahrzeuggetriebes, die in den Figuren 3 und 4 dargestellt ist, unterscheidet sich von der in den Figuren 1 und 2 beschriebenen desweiteren dadurch, daß die Anordnung der Schaltereinrichtungen 5 am Lenkrad 1 anders gewählt ist und daß insgesamt vier Schaltereinrichtungen 5 zur Anwendung kommen. Außerdem schaltet, wie gesagt, eine Betätigung einer der Schaltereinrichtungen 5 auf der Vorderseite des Lenkrads 1, in Schaltrichtung vom Fahrer weg, das Fahrzeuggetriebe sequentiell zurück, während eine Betätigung der Schaltereinrichtungen 5 auf der Rückseite des Lenkrads 1, in Schaltrichtung zum Fahrer hin, das Fahrzeuggetriebe sequentiell hochschaltet. Deshalb ist in Figur 3 auf den Schaltereinrichtungen 5 das Zeichensymbol "Minus" dargestellt, während in Figur 4 die entgegengesetzte Schaltrichtung zum Hochschalten durch das Zeichensymbol "Plus" dargestellt ist. Figur 4 stellt die Rückseite des Lenkrads 1 dar und Figur 3 die Vorderseite. Es werden Schaltereinrichtungen 5 verwendet, die als selbstrückstellende Wippen zum Hoch-und Zurückschalten in zwei entgegengesetzte Richtungen bewegbar sind. Angebracht sind die Schaltereinrichtungen 5 am Lenkradkranz 4, an dessen Übergang zu den Lenkradspeichen 3.

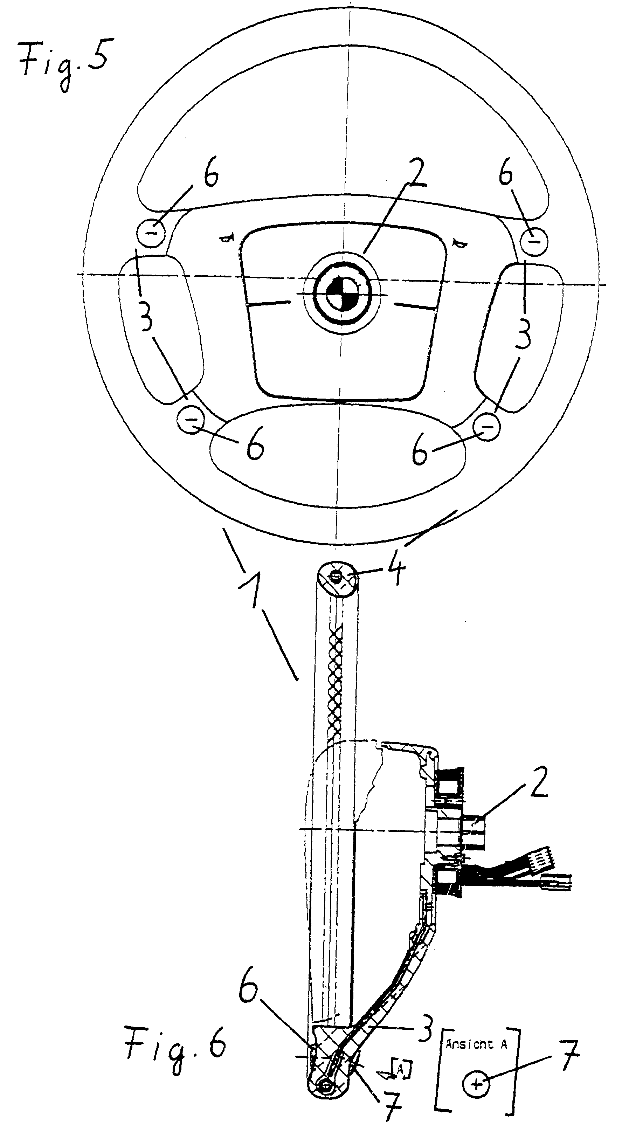

Die weitere Ausführungsform der Betätigungseinrichtung in Figur 5 und Figur 6 zeichnet sich dadurch aus, daß jede Schaltereinrichtung 5 aus zwei selbstrückstellenden Druckschaltern 6,7 besteht. Insgesamt sind vier Schaltereinrichtungen 5 gezeichnet, auf jeder Lenkradspeiche 3 eine. Die Betätigung in Schaltrichtung vom Fahrer weg, jeweils eines Druckschalters 6 in Figur 5, gekennzeichnet mit dem Zeichensymbol Minus, bewirkt jeweils das Zurückschalten des Fahrzeuggetriebes um eine Gangstufe. Das sequentielle Zurückschalten kann wahlweise mit jedem der Druckschalter 6 alleine bewerkstelligt werden oder mit allen Druckschaltern 6 in wahlweiser Abwechslung. Einer der Druckschalter 7 zum Hochschalten der Gangstufen des Fahrzeuggetriebes ist in Figur 6 sichtbar. Sie liegen auf der Rückseite der Lenkradspeichen 3 und werden durch eine zum Fahrer hin gerichtete Bewegung betätigt. Auch die Schaltereinrichtungen 5 dieser Ausführungsform, als Druckschalter 6,7, sind nahe dem Lenkradkranz 4 so angebracht, daß sie sich in Reichweite der nicht gezeichneten Finger des Fahrers befinden, wenn dieser das Lenkrad in einer Stellung für Geradeausfahrt hält.

Bei allen in Figur 1 bis Figur 6 dargestellten Ausführungsformen der Erfindung wird durch einen Lenkeinschlag zwar die Position der Schaltereinrichtungen 5 verändert, aber nicht ihre Funktion, was die Schaltrichtungen für das Hoch- und Zurückschalten betrifft. Deshalb werden solche Fehlschaltungen vermieden, die möglich sind bei bekannten manuellen Betätigungseinrichtungen zum Schalten eines Fahrzeuggetriebes am Lenkrad und darauf beruhen, daß sich bei einem Lenkeinschlag, insbesondere um 180°, auch die Betätigungsrichtungen der Schaltereinrichtungen was das Hoch- bzw. Zurückschalten betrifft ändern.

## Patentansprüche

1. Mit einem Lenkrad (1) sich mitdrehende manuelle Betätigungseinrichtung zum Schalten von Gangstufen eines Fahrzeuggetriebes, insbesondere eines hilfskraftgeschalteten Getriebes, bestehend aus mindestens einer am Lenkrad (1) angebrachten Schaltereinrichtung (5), die es ermöglicht, die Gangstufen des Fahrzeuggetriebes sequentiell hoch- und zurückzuschalten, wobei die Betätigungseinrichtung Schalter zum Hochschalten der Gangstufen und Schalter zum Zurückschalten der Gangstufen aufweist, und
eine Schaltrichtung zum Hochschalten der Gangstufen einer Schaltrichtung zum Zurückschalten der Gangstufen im wesentlichen entgegengesetzt gerichtet ist und beide Schaltrichtungen im wesentlichen in Richtung einer Fahrzeuglängsebene verlaufen,
die Schalter derart angeordnet sind,
dass die Schaltrichtungen sämtlicher zum Hochschalten vorgesehener Schalter vom Fahrer weggerichtet sind und
die Schaltrichtungen sämtlicher zum Zurückschalten vorgesehener Schalter zum Fahrer hingerichtet sind,
oder umgekehrt,
**dadurch gekennzeichnet, dass**
das Fahrzeuggetriebe
durch eine Betätigung der Schaltereinrichtung (5) auf der Vorderseite des Lenkrads (1) zurückschaltbar ist und
durch eine Betätigung der Schaltereinrichtung (5) auf der Rückseite des Lenkrads (1) hochschaltbar ist,
oder umgekehrt.

2. Betätigungseinrichtung nach Anspruch 1, **dadurch gekennzeichnet, daß** die Schaltereinrichtung (5) ein in entgegengesetzte Richtungen bewegbarer, selbstrückstellender Kippschalter ist.

3. Betätigungseinrichtung nach Anspruch 1, **dadurch gekennzeichnet, daß** die Schaltereinrichtung (5) aus zwei selbstrückstellenden Schaltern besteht.

4. Betätigungseinrichtung nach einem der Ansprüche 1 bis 3, **dadurch gekennzeichnet, daß** die Schaltereinrichtung (5) am Lenkrad (1) an oder nahe einem Lenkradkranz (4) so angebracht ist, daß sie sich in Reichweite von Fingern des Fahrers befindet, wenn dieser das Lenkrad (1) in einer Stellung für Geradeausfahrt hält.

## Claims

1. A manual actuating device, rotating with a steering wheel (1), for shifting the gears of a vehicle, especially for operating power-assisted gears, comprising at least one shift means (5) disposed on the steering wheel (1) and adapted to shift the gears sequentially up and down, wherein the actuating means comprises switches for shifting up and switches for shifting down, and
a direction for shifting up to higher gears is substantially opposite to a direction for shifting down, and both directions are substantially in a longitudinal plane of the vehicle, and
the switches are so arranged that
all the means for shifting upwards are actuated in directions away from the driver and
all means for shifting downwards are shifted in directions towards the driver or vice versa,
**characterised in that**
the gear system
can be shifted downwards by actuation of the shift means (5) on the front of the steering wheel (1) and
can be shifted upwards by actuation of the shift means (5) on the back of the steering wheel (1) or vice versa.

2. An actuating means according to claim 1, **characterised in that** the shift means (5) is a self-resetting toggle switch movable in opposite directions.

3. An actuating means according to claim 1, **characterised in that** the shift means (5) comprises two self-resetting switches.

4. An actuating means according to any of claims 1 to 3, **characterised in that** the shift means (5) is disposed on the steering wheel (1) on or near the rim (4) so as to be within reach of the fingers when the driver holds the steering wheel (1) in a position for travel straight ahead.

## Revendications

1. Installation de commande manuelle solidaire en rotation avec un volant de direction (1), destinée à passer des vitesses d'une boîte de vitesses de véhicule automobile, en particulier d'une boîte de vitesses à changement assisté, composée au moins d'une installation de commutation (5) appliquée au volant de direction (1) qui permet de faire passer séquentiellement la boîte de vitesses de véhicule à une vitesse supérieure et inférieure, l'installation de commande présentant des commutateurs pour passer les vitesses supérieures et des commutateurs pour passer les vitesses inférieures, et dans laquelle
une direction de commutation pour passer les vitesses supérieures est pratiquement dirigée à l'opposé d'une direction de commutation pour passer les vitesses inférieures et les deux directions de commutation s'étendent pratiquement en direction d'un plan longitudinal de véhicule, les commutateurs sont disposés de telle sorte que les directions de commutation de tous les commutateurs prévus pour passer la vitesse supérieure sont détournées du conducteur et les directions de commutation de tous les commutateurs prévus pour passer la vitesse inférieure sont tournées vers le conducteur, ou le contraire,
**caractérisée en ce que**
- l'on peut passer la boîte de vitesses du véhicule à la vitesse inférieure en actionnant l'installation de commutation (5) sur le côté avant du volant de direction (1), et
- on peut passer à vitesse supérieure en actionnant l'installation de commutation (5) sur le côté arrière du volant de direction (1), ou
- vice versa.

2. Installation de commande selon la revendication 1,
**caractérisée en ce que**
l'installation de commutation (5) est un commutateur à bascule qui peut se déplacer dans des directions opposées et qui revient automatiquement en position.

3. Installation de commande selon la revendication 1,
**caractérisée en ce que**
l'installation de commutation (5) se compose de deux commutateurs qui reviennent automatiquement en position.

4. Installation de commande selon l'une des revendications 1 à 3,
**caractérisée en ce que**
l'installation de commutation (5) est appliquée au volant de direction (1) ou à proximité d'une couronne de volant de direction (4) de telle sorte qu'elle se trouve à portée des doigts du conducteur lorsque ce dernier tient le volant de direction (1) dans une position pour la conduite en ligne droite.
